# EUROPEAN PATENT APPLICATION

(11) **EP 4 621 901 A1**
(43) Date of publication of application: **24.09.2025**
(21) Application number: 23891232.3
(22) Date of filing: 12.10.2023
(51) Int. Cl.: H01M 10/052, H01M 4/13, H01M 4/131, H01M 4/134, H01M 4/36, H01M 4/48, H01M 4/62

(54) **NON-AQUEOUS ELECTROLYTE SECONDARY BATTERY**

(30) Priority: 17.11.2022 JP 2022184175
(71) Applicant: Panasonic Intellectual Property Management Co., Ltd., Kadoma-shi, Osaka 571-0057 (JP)
(72) Inventor: OTSUKA, Masato, Osaka 571-0057 (JP)
(74) Representative: Eisenführ Speiser
(86) International application number: PCT/JP2023/036946
(87) International publication number: WO 2024/106074

(57) **Abstract**

A non-aqueous electrolyte secondary battery comprises a positive electrode, a negative electrode, and a non-aqueous electrolyte, wherein the positive electrode includes a lithium-containing composite oxide, and a sulfonic acid compound that is present on the surface of particles of the lithium-containing composite oxide. The negative electrode includes a negative electrode core, a first negative electrode mixture layer disposed on the surface of the negative electrode, and a second negative electrode mixture layer disposed between the first negative electrode mixture layer and the negative electrode core, the first negative electrode mixture layer and the second negative electrode mixture layer include a negative electrode active substance and a conductive agent, and the content ratio C1 of the conductive agent in the first negative electrode mixture layer and the content ratio C2 of the conductive agent in the second negative electrode mixture layer satisfy the inequality C1 > C2.

## Description

### TECHNICAL FIELD

The present disclosure relates to a non-aqueous electrolyte secondary battery.

### BACKGROUND

Patent Literature 1 proposes an active material in which a surface layer containing a lithium sulfonate compound is formed at the surface of lithium titanate particles composed mainly of Li₄Ti₅O₁₂. Patent Literature 1 states that by using this active material as the negative electrode active material, it is possible to suppress a change in resistance of a battery before and after storage in a charged state.

### CITATION LIST

### PATENT LITERATURE

PATENT LITERATURE 1: Japanese Unexamined Patent Application Publication No. 2018-006164

### SUMMARY

In non-aqueous electrolyte secondary batteries, improving the charge-discharge cycle characteristic while ensuring a high capacity is an important issue. Conventional techniques including that of Patent Literature 1 are unable to adequately address such issue, and there is still much room for improvement.

A non-aqueous electrolyte secondary battery according to the present disclosure includes a positive electrode, a negative electrode, and a non-aqueous electrolyte. The positive electrode contains a lithium-containing composite oxide and a sulfonic acid compound present at a surface of particles of the lithium-containing composite oxide. The sulfonic acid compound is a compound represented by formula (I). The negative electrode includes a negative electrode core, a first negative electrode mixture layer provided at a surface of the negative electrode, and a second negative electrode mixture layer provided between the first negative electrode mixture layer and the negative electrode core. The first negative electrode mixture layer and the second negative electrode mixture layer contain a negative electrode active material and a conductive agent. A content C1 of the conductive agent in the first negative electrode mixture layer and a content C2 of the conductive agent in the second negative electrode mixture layer satisfy C1 > C2. 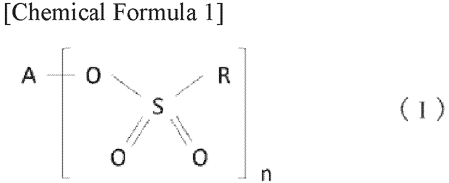 (where A is a Group 1 or Group 2 element, R is a hydrocarbon group, and n is 1 or 2.)

The non-aqueous electrolyte secondary battery according to the present disclosure has a high capacity and an excellent charge-discharge cycle characteristic.

### BRIEF DESCRIPTION OF DRAWINGS

FIG. 1 is a cross-sectional view of a non-aqueous electrolyte secondary battery according to an example embodiment.
FIG. 2 is a cross-sectional view of a negative electrode in an example embodiment.

### DESCRIPTION OF EMBODIMENTS

When the lithium titanate described in Patent Literature 1 is used for the positive electrode, the reaction potential is low, and there results a decreased battery capacity. As a result of studies by the present inventors, it has been found that a non-aqueous electrolyte secondary battery having a high capacity and low resistance can be realized by causing a sulfonic acid compound represented by the above formula (I) to be present at the surface of particles of a lithium-containing composite oxide used as the positive electrode active material. This is considered to be because the sulfonic acid compound functions to reduce the reaction resistance of the positive electrode, making it possible to increase the depth of charge and discharge. However, as the depth of charge and discharge increases due to the reduction in reaction resistance, a new problem arises in that the charge-discharge cycle characteristic becomes deteriorated. It is presumed that the increased depth of charge and discharge causes larger volume changes in the negative electrode, and this results in disconnection of conductive paths in the negative electrode mixture layer.

In view of the above, the present inventors have conducted further studies, and succeeded in improving the charge-discharge cycle characteristic while also maintaining a high capacity by using, as the positive electrode active material, a lithium-containing composite oxide having a specific sulfonic acid compound adhered to the particle surface thereof, and by forming the negative electrode mixture layer to have a two-layer structure in which the content of the conductive agent in a first negative electrode mixture layer located toward the surface is greater than the content of the conductive agent in a second negative electrode mixture layer located toward the core. It is considered that, in a non-aqueous electrolyte secondary battery according to the present disclosure, conductive paths in the negative electrode mixture layer are maintained even under a condition of increased depth of charge and discharge, and the charge-discharge cycle characteristic is thereby improved.

An example embodiment of a non-aqueous electrolyte secondary battery according to the present disclosure will now be described in detail by reference to the drawings. Configurations obtained by selectively combining the constituent elements of a plurality of embodiments and variants described below are included within the scope of the present disclosure. In the present specification, the symbol "-" signifies a range inclusive of the upper and lower limits indicated before and after "-".

In the following, although a cylindrical battery in which a spiral-type electrode assembly 14 is housed in a bottomed cylindrical outer can 16 will be described as the non-aqueous electrolyte secondary battery by way of example, the outer casing of the battery is not limited to a cylindrical outer can. The non-aqueous electrolyte secondary battery according to the present disclosure may be, for example, a rectangular battery having a rectangular outer can or a coin-shaped battery having a coin-shaped outer can, or may be a pouch-type battery having an outer casing composed of a laminate sheet including a metal layer and a resin layer. Furthermore, the electrode assembly is not limited to being of a spiral type, and may be a laminate-type electrode assembly formed by alternately laminating a plurality of positive electrodes and a plurality of negative electrodes with interposed separators.

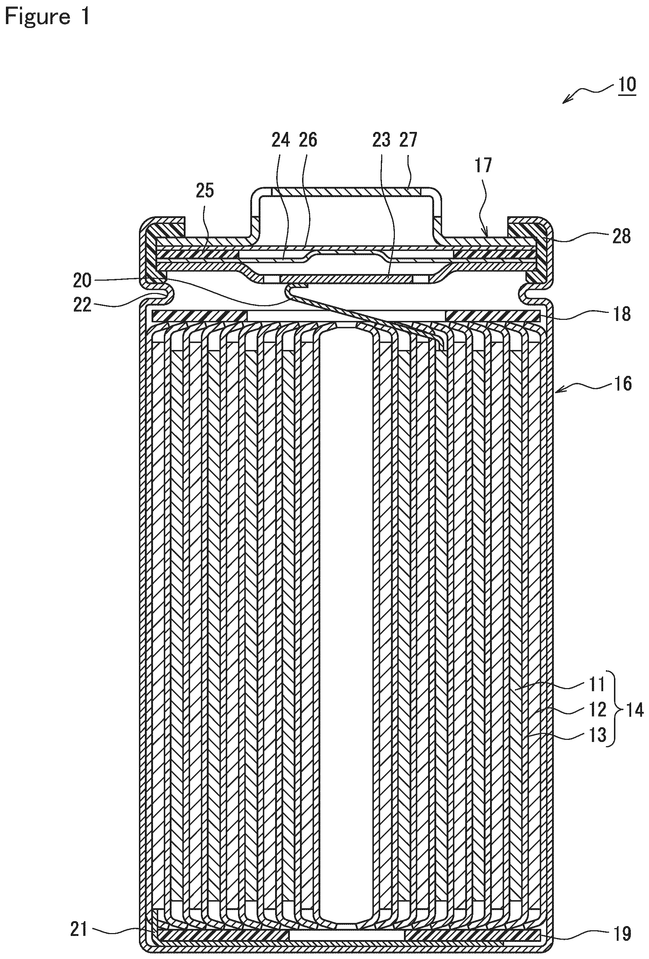

FIG. 1 is a cross-sectional view of a non-aqueous electrolyte secondary battery 10 according to an example embodiment. As shown in FIG. 1, the non-aqueous electrolyte secondary battery 10 comprises a spiral-type electrode assembly 14, a non-aqueous electrolyte, and an outer can 16 that houses the electrode assembly 14 and the non-aqueous electrolyte. The electrode assembly 14 comprises a positive electrode 11, a negative electrode 12, and a separator 13, and has a spiral structure formed by spirally winding the positive electrode 11 and the negative electrode 12 with the separator 13 interposed. The outer can 16 is a bottomed cylindrical metal container having an opening at one axial end, and the opening of the outer can 16 is closed by a sealing assembly 17. For convenience of explanation, the side of the battery toward the sealing assembly 17 will be referred to as "upper", and the side toward the bottom of the outer can 16 will be referred to as "lower".

The non-aqueous electrolyte has lithium-ion conductivity. The non-aqueous electrolyte may be a liquid electrolyte (or electrolyte solution) or a solid electrolyte.

The liquid electrolyte (or electrolyte solution) contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as LiPF₆ is used.

As the solid electrolyte, it is possible to use, for example, a solid or gel polymer electrolyte, an inorganic solid electrolyte, or the like. As the inorganic solid electrolyte, a material known for use in all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer, or a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

The positive electrode 11, the negative electrode 12, and the separator 13, which constitute the electrode assembly 14, are all long strip-shaped members, and are alternately laminated in the radial direction of the electrode assembly 14 by being wound in a spiral shape. The negative electrode 12 is formed to have a size slightly larger than the positive electrode 11 in order to prevent lithium deposition. That is, the negative electrode 12 is formed to be longer than the positive electrode 11 in the lengthwise direction and in the widthwise direction. The separator 13 is formed to have a size slightly larger than at least the positive electrode 11, and, for example, two sheets of the separator are arranged so as to sandwich the positive electrode 11. The electrode assembly 14 has a positive electrode lead 20 connected to the positive electrode 11 by welding or the like, and a negative electrode lead 21 connected to the negative electrode 12 by welding or the like.

Above and below the electrode assembly 14, insulating plates 18, 19 are provided respectively. In the example shown in FIG. 1, the positive electrode lead 20 extends through a through hole in the insulating plate 18 and toward the sealing assembly 17, while the negative electrode lead 21 extends outside the insulating plate 19 and toward the bottom of the outer can 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom of the outer can 16, and the outer can 16 serves as the negative electrode terminal.

A gasket 28 is provided between the outer can 16 and the sealing assembly 17 to ensure airtightness inside the battery. The outer can 16 has a grooved portion 22 formed thereon, where a part of the side wall projects inward, and which supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and the opening end of the outer can 16 which is crimped to the sealing assembly 17.

The sealing assembly 17 has a structure obtained by laminating, in order from the electrode assembly 14 side, the internal terminal plate 23, a lower vent member 24, an insulating member 25, an upper vent member 26, and the cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral portions of these vent members. When the battery internal pressure increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, and the separator 13 which constitute the electrode assembly 14.

### [Positive Electrode]

The positive electrode 11 comprises, for example, a positive electrode core and a positive electrode mixture layer provided on a surface of the positive electrode core. As the positive electrode core, it is possible to use a foil of a metal such as aluminum that is stable in the potential range of the positive electrode 11, a film having such metal disposed on its surface, and the like. The positive electrode mixture layer contains a positive electrode active material, a conductive agent, and a binder, and is preferably provided on both sides of the positive electrode core in areas other than the portion to which the positive electrode lead 20 is connected. The positive electrode 11 can be produced by, for example, applying a positive electrode mixture slurry containing the positive electrode active material, the conductive agent, and the binder onto the surfaces of the positive electrode core, drying the applied coating, and then compressing the coating to thereby form a positive electrode mixture layer on each of the two sides of the positive electrode core.

Examples of the conductive agent contained in the positive electrode mixture layer include carbon materials, including carbon black such as acetylene black and Ketjenblack, graphite, carbon nanotubes (CNT), carbon nanofibers, and graphene. Examples of the binder contained in the positive electrode mixture layer include fluororesins such as polytetrafluoroethylene (PTFE) and polyvinylidene fluoride (PVDF), polyacrylonitrile (PAN), polyimides, acrylic resins, and polyolefins. These resins may be used in combination with carboxymethyl cellulose (CMC) or a salt thereof, polyethylene oxide (PEO), and the like. The content of each of the conductive agent and the binder is, for example, greater than or equal to 0.1 mass% and less than or equal to 5 mass% based on the mass of the positive electrode mixture layer.

The positive electrode 11 contains a lithium-containing composite oxide and a sulfonic acid compound present at the surface of particles of the composite oxide. The lithium-containing composite oxide having the sulfonic acid compound adhered to the particle surface functions as the positive electrode active material. The sulfonic acid compound is a compound represented by formula (I).

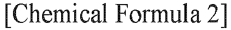

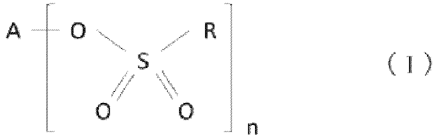

In the formula, A is a Group 1 or Group 2 element, R is a hydrocarbon group, and n is 1 or 2.

The sulfonic acid compound represented by formula (I) (hereinafter may be simply referred to as "the sulfonic acid compound") reduces the reaction resistance of the positive electrode 11 and improves the output characteristic of the battery. Furthermore, with the reduction in resistance, the depth of charge and discharge can be increased, and an increase in capacity can be achieved.

From the perspective of achieving a high capacity, the amount of the sulfonic acid compound present at the surface of the lithium-containing composite oxide is preferably greater than or equal to 0.1 mass% and less than or equal to 1 mass% based on the mass of the lithium-containing composite oxide.

The positive electrode active material is mainly composed of composite particles of the lithium-containing composite oxide having the sulfonic acid compound adhered to the particle surface, and may be composed substantially of only the composite particles. The positive electrode active material may contain a composite oxide other than the composite particles or any other compound so long as the object of the present disclosure is not impaired.

The lithium-containing composite oxide preferably has a layered rock salt structure. Examples of the layered rock salt structure of the lithium-containing composite oxide include a layered rock salt structure belonging to the space group R-3m, and a layered rock salt structure belonging to the space group C2/m. Among these, in terms of achieving a high capacity and stability of the crystal structure, a layered rock salt structure belonging to the space group R-3m is preferable. The layered rock salt structure of the lithium-containing composite oxide includes a transition metal layer, a Li layer, and an oxygen layer.

The lithium-containing composite oxide is a composite oxide containing metal elements such as Ni, Co, Al, and Mn in addition to Li. The metal elements constituting the lithium-containing composite oxide are, for example, Ni, Co, and M (where M is at least one element selected from the group consisting of Al, Mn, Fe, Ti, Si, Nb, Mo, W, and Zn). Among the foregoing, at least one selected from Ni, Co, Al, and Mn is preferably contained. Examples of suitable composite oxides include a composite oxide containing Ni, Co, and Al, and a composite oxide containing Ni, Co, and Mn.

From the perspective of achieving a high capacity and the like, the lithium-containing composite oxide preferably contains Ni in an amount of greater than or equal to 80 mol% based on the total number of moles of metal elements other than Li. Further, the advantageous effect of adding the sulfonic acid compound is more notable when a lithium-containing composite oxide having a high Ni content is used. The Ni content may be greater than or equal to 87 mol%, or greater than or equal to 90 mol%, based on the total number of moles of metal elements other than Li. The upper limit of the Ni content is, for example, 95 mol%.

As noted above, an example of a suitable lithium-containing composite oxide is a composite oxide containing Ni, Co, and M. The Co content is, for example, greater than or equal to 0 mol% and less than or equal to 20 mol% based on the total number of moles of metal elements other than Li. The content of M is, for example, greater than or equal to 0 mol% and less than or equal to 20 mol% based on the total number of moles of metal elements other than Li. While Co need not be substantially added, adding a small amount of Co improves the battery performance. M preferably includes at least one of Mn and Al.

The lithium-containing composite oxide is, for example, a composite oxide represented by general formula LiₐNiₓCo_{y}M_{z}O_{2-b} (where 0.95 ≤ a ≤ 1.2, 0.80 ≤ x ≤ 0.95, 0 ≤ y ≤ 0.20, 0 ≤ z ≤ 0.20, 0 ≤ b ≤ 0.05, x+y+z = 1, and M is at least one element selected from the group consisting of Al, Mn, Fe, Ti, Si, Nb, Mo, W, and Zn). In the above general formula, x preferably satisfies 0.87 ≤ x ≤ 0.95.

The contents of the elements constituting the lithium-containing composite oxide can be measured by an inductively coupled plasma atomic emission spectrometer (ICP-AES), an electron probe microanalyzer (EPMA), an energy dispersive X-ray analyzer (EDX), or the like.

The lithium-containing composite oxide is, for example, in the form of secondary particles formed by aggregation of a plurality of primary particles. The volume-based median diameter (D50) of the composite oxide is not particularly limited, and is, for example, greater than or equal to 3 µm and less than or equal to 30 µm, and preferably greater than or equal to 5 µm and less than or equal to 25 µm. When the composite oxide is in the form of secondary particles formed by aggregation of primary particles, the D50 of the composite oxide denotes the D50 of the secondary particles. D50 means a particle size at which, in a volume-based particle size distribution, the cumulative frequency from the smaller particle size side reaches 50 %, and is also called a mid-level diameter. The particle size distribution of the composite oxide (and also that of the negative electrode active material) can be measured with a laser diffraction particle size distribution measuring device (e.g., MT3000II manufactured by MicrotracBEL Corp.) using water as the dispersion medium.

The average particle size of the primary particles constituting the lithium-containing composite oxide is, for example, greater than or equal to 0.05 µm and less than or equal to 1 µm. The average particle size of the primary particles is calculated by averaging the diameters of circles circumscribing primary particles extracted by analyzing a scanning electron microscope (SEM) image of cross sections of secondary particles.

As noted above, the sulfonic acid compound present at the particle surface of the lithium-containing composite oxide is a compound represented by formula (I).

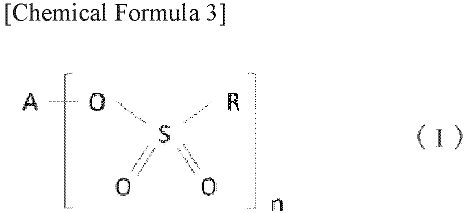

In the formula, A is a Group 1 or Group 2 element, R is a hydrocarbon group, and n is 1 or 2. A is preferably a Group 1 element. In particular, Li or Na is more preferable, and Li is particularly preferable.

In formula (I), R is preferably an alkyl group. The number of carbon atoms in the alkyl group is preferably less than or equal to 5, and more preferably less than or equal to 3. From the perspective of reducing reaction resistance and the like, a suitable example of R is an alkyl group having 3 or less carbon atoms, and especially a methyl group is preferable. In R, part of the hydrogen atoms bonded to the carbon atoms may be substituted with fluorine. Further, n in formula (I) is preferably 1.

Specific examples of the sulfonic acid compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate is preferable, and lithium methanesulfonate is particularly preferable.

For example, the sulfonic acid compound is present uniformly over the entire surface of the lithium-containing composite oxide particles. The presence of the sulfonic acid compound at the surface of the lithium-containing composite oxide particles can be confirmed by Fourier transform infrared spectroscopy (FT-IR). In an infrared absorption spectrum obtained by FT-IR, a positive electrode active material containing lithium methanesulfonate has, for example, absorption peaks around 1238 cm⁻¹, 1175 cm⁻¹, 1065 cm⁻¹, and 785 cm⁻¹. The peaks around 1238 cm⁻¹, 1175 cm⁻¹, and 1065 cm⁻¹ are peaks caused by SO stretching vibration derived from lithium methanesulfonate. The peak around 785 cm⁻¹ is a peak caused by CS stretching vibration derived from lithium methanesulfonate.

As for a positive electrode active material containing a sulfonic acid compound other than lithium methanesulfonate, the presence of the sulfonic acid compound can similarly be confirmed from absorption peaks derived therefrom in an infrared absorption spectrum. Presence of a sulfonic acid compound at the surface of the lithium-containing composite oxide particles can also be confirmed by ICP, atomic absorption spectrometry, X-ray photoelectron spectroscopy (XPS), synchrotron radiation XRD measurement, TOF-SIMS, or the like.

A positive electrode active material according to an example embodiment can be produced by the following method. The production method described herein is only one example, and the method for producing the positive electrode active material is not limited to this method.

First, a metal oxide containing metal elements such as Ni, Co, Al, and Mn is synthesized. Next, this metal oxide and a lithium compound are mixed together and fired to obtain a lithium-containing composite oxide. The metal oxide can be synthesized by, for example, adding dropwise an alkaline solution of sodium hydroxide or the like to a solution of a metal salt containing Ni, Co, Al, Mn, and the like while stirring to adjust the pH to the alkaline side (for example, to a value of greater than or equal to 8.5 and less than or equal to 12.5), thereby causing a composite hydroxide containing metal elements such as Ni, Co, Al, Mn, and the like to be precipitated (or co-precipitated), and heat-treating this composite hydroxide. No particular limitation is imposed on the heat treatment temperature, and is, for example, higher than or equal to 300 °C and lower than or equal to 600 °C.

Examples of the lithium compound include Li₂CO₃, LiOH, Li₂O₂, Li₂O, LiNO₃, LiNO₂, Li₂SO₄, LiOH•H₂O, LiH, and LiF. The metal oxide and the lithium compound are mixed such that, for example, the molar ratio of the metal elements in the metal oxide to Li in the lithium compound is in the range of 1:0.98 to 1:1.1. At the time of mixing together the metal oxide and the lithium compound, other metal materials may be added as necessary.

The mixture of the metal oxide and the lithium compound is fired, for example, in an oxygen atmosphere. The mixture may be fired through a plurality of heating processes. The firing step includes, for example, a first heating step of heating to a temperature of higher than or equal to 450 °C and lower than or equal to 680 °C at a heating rate of more than or equal to 1.0 °C/min and less than or equal to 5.5 °C/min, and a second heating step of heating to a temperature higher than 680 °C at a heating rate of more than or equal to 0.1 °C/min and less than or equal to 3.5 °C/min. The maximum temperature reached in the firing step may be set to a temperature of higher than or equal to 700 °C and lower than or equal to 850 °C, and this temperature may be maintained for a period of time of more than or equal to 1 hour and less than or equal to 10 hours.

Next, the fired product (i.e., the lithium-containing composite oxide) is washed with water and dehydrated to obtain a cake-like composition. This cleansing step removes any remaining alkaline components. The water-washing and dehydration can be carried out by a conventionally known method. Subsequently, the cake-like composition is dried to obtain a powder composition. The drying step may be performed in a vacuum atmosphere. The drying conditions in one example are a temperature of higher than or equal to 150 °C and lower than or equal to 400 °C, and a period of time of more than or equal to 0.5 hours and less than or equal to 15 hours.

A sulfonic acid compound is added to, for example, the cake-like composition obtained by the cleansing step, or to the powder composition obtained by the drying step. At that time, a sulfonic acid solution may be added instead of or together with the sulfonic acid compound. As a result, there is obtained a positive electrode active material in which the sulfonic acid compound is adhered to the surface of the lithium-containing composite oxide particles. The sulfonic acid compound may be added in the form of an aqueous dispersion. The sulfonic acid solution is preferably an aqueous solution of sulfonic acid. The concentration of sulfonic acid in the sulfonic acid solution is, for example, greater than or equal to 0.5 mass% and less than or equal to 40 mass%.

Since a certain amount of lithium compound remains in the cake-like composition, by adding a sulfonic acid solution to the cake-like composition, Li dissolved in the water in the cake reacts with the sulfonic acid, and lithium sulfonate is thereby obtained.

### [Negative Electrode]

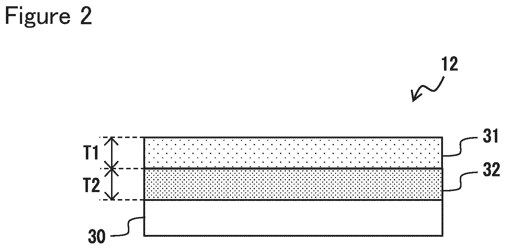

FIG. 2 is a cross-sectional view of the negative electrode 12 in an example embodiment. As shown in FIG. 2, the negative electrode 12 comprises a negative electrode core 30, a first negative electrode mixture layer 31 provided at the surface of the negative electrode 12, and a second negative electrode mixture layer 32 provided between the first negative electrode mixture layer 31 and the negative electrode core. As the negative electrode core 30, it is possible to use a foil of a metal such as copper that is stable in the potential range of the negative electrode 12, a film having such metal disposed on its surface, and the like. The first negative electrode mixture layer 31 and the second negative electrode mixture layer 32 are preferably provided on both sides of the negative electrode core 30 in areas other than the portion to which the negative electrode lead 21 is connected. The configuration of the negative electrode 12 is not limited to the example in FIG. 2. For example, a functional layer may be provided between the second negative electrode mixture layer 32 and the negative electrode core 30.

For example, the thickness T1 of the first negative electrode mixture layer 31 and the thickness T2 of the second negative electrode mixture layer 32 satisfy T1/(T1+T2) ≤ 0.5. With this feature, the amount of conductive agent used in producing the negative electrode 12 can be reduced. The lower limit of T1/(T1+T2) is, for example, 0.1.

The first negative electrode mixture layer 31 and the second negative electrode mixture layer 32 (hereinafter, the first negative electrode mixture layer and the second negative electrode mixture layer may be collectively referred to as the negative electrode mixture layers) contain a negative electrode active material and a conductive agent. No particular limitation is imposed on the negative electrode active material contained in the negative electrode mixture layers so long as it can reversibly occlude and release lithium ions. The negative electrode active material contained in the first negative electrode mixture layer 31 and that contained in the second negative electrode mixture layer 32 may be different from each other, but are preferably the same. Generally, a carbon material is used as the negative electrode active material. The carbon material is, for example, at least one selected from the group consisting of natural graphite, artificial graphite, soft carbon, and hard carbon. Among these, it is preferable to use artificial graphite such as massive artificial graphite (MAG) and graphitized mesophase carbon microbeads (MCMB), natural graphite such as flake graphite, massive graphite, and amorphous graphite, or a mixture thereof. The volume-based D50 of the carbon material is, for example, greater than or equal to 1 µm and less than or equal to 30 µm, and preferably greater than or equal to 5 µm and less than or equal to 25 µm.

Soft carbon and hard carbon are classified as amorphous carbon which does not have a developed graphite crystal structure. More specifically, soft carbon and hard carbon mean carbon components having a d(002) interplanar spacing of greater than or equal to 0.342 nm as determined by an X-ray diffraction technique. Soft carbon is also referred to as graphitizable carbon, and is carbon that is more easily graphitized by high-temperature treatment than hard carbon. Hard carbon is also referred to as non-graphitizable carbon. In relation to the configuration of the present invention, it is not necessary to clearly distinguish between soft carbon and hard carbon. As the negative electrode active material, graphite may be used in combination with amorphous carbon, which is at least one of soft carbon and hard carbon.

From the perspective of achieving a high capacity, the negative electrode active material contained in the negative electrode mixture layers preferably includes a silicon-containing material. Since silicon-containing materials undergo larger volume changes during charging and discharging than carbon materials, when the negative electrode mixture layers contain a silicon-containing material, disconnection of conductive paths tends to occur between the negative electrode mixture layers. However, by configuring such that the content of the conductive agent in the first negative electrode mixture layer 31 is greater than the content of the conductive agent in the second negative electrode mixture layer 32 as described later, it is possible to inhibit disconnection of conductive paths and improve the charge-discharge cycle characteristic. The silicon-containing material may be any material containing Si, and examples thereof include silicon alloys, silicon compounds, and composite materials containing Si. Among these, a composite material containing Si is preferable. The D50 of the composite material is generally less than the D50 of graphite. The volume-based D50 of the composite material is, for example, greater than or equal to 1 µm and less than or equal to 15 µm. As the silicon-containing material, a single type may be used alone, or two or more types may be used in combination.

A suitable silicon-containing material (i.e., the above-noted composite material) is composite particles that include an ion-conducting phase and a Si phase dispersed in the ion-conducting phase. The ion-conducting phase is, for example, at least one selected from the group consisting of a silicate phase, a carbon phase, a silicide phase, and a silicon oxide phase. The silicide phase is a phase of a compound composed of Si and an element that is more electropositive than Si, and examples thereof include NiSi, Mg₂Si, and TiSi₂. The Si phase is formed by dispersing Si in the form of fine particles. The ion-conducting phase is a continuous phase composed of a collection of particles finer than the Si phase.

The average size of the Si phase is preferably greater than or equal to 1 nm and less than or equal to 200 nm, and more preferably greater than or equal to 1 nm and less than or equal to 100 nm. The average size of the Si phase is calculated by capturing an SEM image of particle cross sections of the silicon-containing material, and averaging diameters of circles circumscribing the Si phase extracted by image analysis. The average size of the Si phase may be, for example, greater than or equal to 1 nm and less than or equal to 10 nm. By reducing the size of the Si phase, the rate of particle expansion that occurs along with charging and discharging can be restrained while maintaining a high capacity.

The above-noted composite material may have a conductive layer covering the surface of the ion-conducting phase. The conductive layer is composed of a material having a higher conductivity than the ion-conducting layer, and forms good conductive paths in the negative electrode mixture layers. The conductive layer is, for example, a carbon coating made of a conductive carbon material. As the conductive carbon material, it is possible to use carbon black such as acetylene black and Ketjenblack, graphite, shapeless carbon (or amorphous carbon) having low crystallinity, and the like. In consideration of ensuring electrical conductivity and diffusibility of Li ions into the interior of the particles, the thickness of the conductive layer is preferably greater than or equal to 1 nm and less than or equal to 200 nm, and more preferably greater than or equal to 5 nm and less than or equal to 100 nm. The thickness of the conductive layer can be measured by observing a cross section of the composite material using a SEM or a transmission electron microscope (TEM).

An example of a suitable composite material containing Si is composite particles which have a sea-island structure with fine Si dispersed approximately uniformly in an amorphous silicon oxide phase, and which is, as a whole, represented by general formula SiOₓ (where 0.5 ≤ x ≤ 1.5). The main component of the silicon oxide may be silicon dioxide. Further, the silicon oxide phase may be doped with Li.

Another example of a suitable composite material containing Si is composite particles having a sea-island structure in which fine Si is dispersed approximately uniformly in an amorphous silicate phase. The silicate phase contains, for example, at least one element selected from the group consisting of Group 1 and Group 2 elements of the periodic table. The silicate phase may further contain at least one element selected from the group consisting of B, Al, Zr, Nb, Ta, V, La, Y, Ti, P, Bi, Zn, Sn, Pb, Sb, Co, Er, F, and W.

A suitable silicate phase is a lithium silicate phase containing Li. The lithium silicate phase is, for example, a composite oxide phase represented by general formula Li_{2z}SiO_{(2+z)} (where 0 < z < 2). The lithium silicate phase preferably does not contain Li₄SiO₄ (Z=2). Since Li₄SiO₄ is an unstable compound that reacts with water and exhibits alkalinity, Li₄SiO₄ may cause modification of Si and bring about a decrease in charge and discharge capacity. In terms of stability, productivity, Li ion conductivity, and the like, it is preferable that the lithium silicate phase is mainly composed of Li₂SiO₃ (Z=1) or Li₂Si₂O₅ (Z = 1/2).

Another example of a suitable composite material containing Si is composite particles having a sea-island structure in which fine Si is dispersed approximately uniformly in a carbon phase. In at least part of the silicon-containing material, the ion-conducting phase is preferably a carbon phase. The carbon phase is preferably an amorphous carbon phase. While the carbon phase may contain crystalline phase components, it is preferable that amorphous phase components are contained in a greater amount. The amorphous carbon phase is, for example, composed of a carbon material having an average (002) interplanar spacing of greater than or equal to 0.34 nm as measured by an X-ray diffraction technique. A composite material containing a carbon phase may or may not have a conductive layer separate from the carbon phase.

In the first negative electrode mixture layer 31 and the second negative electrode mixture layer 32, the ratio of the silicon-containing material contained in the negative electrode active material is, for example, greater than or equal to 1 mass% and less than or equal to 20 mass%. The ratio of the silicon-containing material in the first negative electrode mixture layer 31 and the ratio of the silicon-containing material in the second negative electrode mixture layer 32 may be different from each other, but are preferably the same.

The content C1 of the conductive agent in the first negative electrode mixture layer 31 and the content C2 of the conductive agent in the second negative electrode mixture layer 32 satisfy C1 > C2. With this feature, the charge-discharge cycle characteristic can be improved while ensuring a high capacity. Since the first negative electrode mixture layer 31 located at the surface of the negative electrode 12 undergoes larger volume changes than the second negative electrode mixture layer 32 located in the interior of the negative electrode 12, it is presumed that conductive paths therein tend to become disconnected, and that by configuring such that C1 > C2, the conductive paths are more likely to be maintained.

C1 and C2 preferably satisfy 1 < C1/C2 ≤ 10. The lower limit of C1/C2 is, for example, 1.1. For example, C1 is greater than or equal to 0.01 mass% and less than or equal to 10 mass% based on the mass of the negative electrode active material contained in the first negative electrode mixture layer 31, and C2 is greater than or equal to 0.005 mass% and less than or equal to 5 mass% based on the mass of the negative electrode active material contained in the second negative electrode mixture layer 32.

The conductive agent may be particulate carbon made of carbon black, acetylene black, Ketjenblack, graphite, and the like, but is preferably fibrous carbon. Fibrous carbon can inhibit disconnection of conductive paths more effectively than particulate carbon, and therefore can achieve a more notable improvement of the charge-discharge cycle characteristic. As the conductive agent, particulate carbon and fibrous carbon may be used in combination.

Examples of fibrous carbon include carbon nanotubes (CNT), carbon nanohorns (CNH), carbon nanofibers (CNF), vapor-grown carbon fibers (VGCF), electrospun carbon fibers, polyacrylonitrile (PAN)-based carbon fibers, and pitch-based carbon fibers. These may be used alone or by combining two or more types thereof. Among these, it is preferable to use CNT. No particular limitation is imposed on the layer structure of the CNT, and the CNT may be either single-walled carbon nanotubes (single-walled CNT) or multi-walled carbon nanotubes (multi-walled CNT).

The first negative electrode mixture layer 31 and the second negative electrode mixture layer 32 may further contain a binder. Examples of the binder include styrene-butadiene rubber (SBR), nitrile-butadiene rubber (NBR), fluorine-containing resins such as polytetrafluoroethylene (PTFE) and polyvinylidene fluoride (PVDF), polyacrylonitrile (PAN), polyimide, acrylic resin, and polyolefin. Among these, SBR and NBR are preferable, and SBR is particularly preferable. A single type among the foregoing may be used alone, or two or more types may be used in combination. The binder contained in the first negative electrode mixture layer 31 and the binder contained in the second negative electrode mixture layer 32 may be different from each other, but are preferably the same. The content of the conductive agent in the first negative electrode mixture layer 31 is, for example, greater than or equal to 0 mass% and less than or equal to 10 mass% based on the mass of the negative electrode active material contained in the first negative electrode mixture layer 31. The content of the conductive agent in the second negative electrode mixture layer 32 may be different therefrom, but are preferably the same.

The first negative electrode mixture layer 31 and the second negative electrode mixture layer 32 may further contain a thickener. Examples of the thickener include carboxymethyl cellulose (CMC) or a salt thereof (such as CMC-Na), polyacrylic acid (PAA) or a salt thereof (such as PAA-Na or PAA-K, which may be a partially neutralized salt), and polyvinyl alcohol (PVA). A single type among these may be used alone, or two or more types may be used in combination.

Next, a method for forming the first negative electrode mixture layer 31 and the second negative electrode mixture layer 32 will be described. For example, first of all, a first negative electrode mixture slurry is prepared by mixing together a negative electrode active material, a conductive agent, a solvent such as water, and the like. Separately, a second negative electrode mixture slurry is prepared by mixing together a negative electrode active material, a conductive agent, a solvent such as water, and the like. At that time, the content of the conductive agent in the first negative electrode mixture slurry is set to be greater than the content of the conductive agent in the second negative electrode mixture slurry. Then, the second negative electrode mixture slurry is applied to both sides of a negative electrode core and dried, and after that, the first negative electrode mixture slurry is applied onto the coating composed of the second negative electrode mixture slurry and dried. Further, the coatings are rolled using a roller, and the first negative electrode mixture layer 31 and the second negative electrode mixture layer 32 can thereby be formed. In the above method, the second negative electrode mixture slurry is applied and dried, and then the first negative electrode mixture slurry is applied. However, the first negative electrode mixture slurry may be applied at a point after applying but before drying the second negative electrode mixture slurry. Alternatively, the first negative electrode mixture slurry may be applied onto the second negative electrode mixture layer 32 after the second negative electrode mixture slurry is applied, dried, and rolled. By changing the rolling conditions between the first negative electrode mixture layer 31 and the second negative electrode mixture layer 32, the packing density of each layer can be adjusted more freely.

### [Separator]

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like.

A filler layer containing an inorganic filler may be formed at the interface between the separator 13 and at least one of the positive electrode 11 and the negative electrode 12. Examples of the inorganic filler include oxides and phosphate compounds containing metal elements such as Ti, Al, Si, and Mg. The filler layer can be formed by applying a slurry containing the filler onto the surface of the positive electrode 11, the negative electrode 12, or the separator 13.

### EXAMPLES

While the present disclosure will now be further described using Examples, the present disclosure is not limited to these Examples.

### <Example 1>

### [Preparation of Positive Electrode Active Material]

A composite hydroxide represented by [Ni_{0.90}Al_{0.05}Mn_{0.05}](OH)₂ and obtained by a co-precipitation method was fired at 500 °C for 8 hours, and an oxide (Ni_{0.90}Al_{0.05}Mn_{0.05}O₂) was obtained. Next, LiOH and the composite oxide were mixed such that the molar ratio of Li to the total amount of Ni, Al, and Mn was 1.03:1, and a mixture was obtained. This mixture was fired under an oxygen stream having an oxygen concentration of 95 % (with a flow rate of 2 mL/min per 10 cm³ and 5 L/min per 1 kg of the mixture) at a heating rate of 2.0 °C/min from room temperature to 650 °C, and subsequently at a heating rate of 0.5 °C/min from 650 °C to 780 °C, and a lithium-containing composite oxide was obtained.

To the obtained lithium-containing composite oxide, water was added to achieve a slurry concentration of 1500 g/L, and the slurry was stirred for 15 minutes and filtered to obtain a cake-like composition. To this cake-like composition, lithium methanesulfonate in powder form was added. The amount of lithium methanesulfonate added was 0.5 mass% based on the total mass of the lithium-containing composite oxide. After adding lithium methanesulfonate, drying was performed in a vacuum atmosphere at 180 °C for 2 hours, and a positive electrode active material was obtained. Presence of lithium methanesulfonate at the particle surface of the composite oxide was confirmed by Fourier transform infrared spectroscopy (FT-IR).

### [Production of Positive Electrode]

A positive electrode mixture slurry was prepared by mixing together the above positive electrode active material, acetylene black, and polyvinylidene fluoride in a mass ratio of 98:1:1, and using N-methyl-2-pyrrolidone (NMP) as the dispersion medium. Next, the positive electrode mixture slurry was applied onto a positive electrode core made of aluminum foil, and the applied coating was dried and compressed. After that, the positive electrode core was cut into a predetermined electrode size, and a positive electrode having a positive electrode mixture layer formed on each of the two sides of the positive electrode core was obtained. In a part of the positive electrode, there was provided an exposed portion where a surface of the positive electrode core was exposed.

### [Production of Negative Electrode]

Artificial graphite and SiO were mixed together in a mass ratio of 97:3, and this was used as the negative electrode active material. A first negative electrode mixture slurry was prepared by mixing together 100 parts by mass of the negative electrode active material, 0.2 parts by mass of single-walled carbon nanotubes (single-walled CNT), 1 part by mass of styrene-butadiene rubber (SBR), and 1 part by mass of carboxymethyl cellulose (CMC), and adding an appropriate amount of water. Further, a second negative electrode mixture slurry was prepared by mixing together 100 parts by mass of the negative electrode active material, 0.1 parts by mass of single-walled carbon nanotubes (single-walled CNT), 1 part by mass of SBR, and 1 part by mass of CMC, and adding an appropriate amount of water.

The second negative electrode mixture slurry was applied to both sides of a negative electrode core made of copper foil by a doctor blade method, and then dried to form a second negative electrode mixture layer. Further, the above first negative electrode mixture slurry was applied onto the second negative electrode mixture layer and dried to form a first negative electrode mixture layer. At that time, the coating mass ratio per unit area of the first negative electrode mixture slurry to that of the second negative electrode mixture slurry was 50:50. The first negative electrode mixture layer and the second negative electrode mixture layer were rolled with a roller, and a negative electrode was thereby produced. The value of T1/(T1+T2) calculated from the thickness T1 of the first negative electrode mixture layer and the thickness T2 of the second negative electrode mixture layer in the produced negative electrode was 0.5. In a part of the negative electrode, there was provided an exposed portion where a surface of the negative electrode core was exposed.

### [Preparation of Non-Aqueous Electrolyte]

Into a mixed solvent obtained by mixing together ethylene carbonate (EC), ethyl methyl carbonate (EMC), and dimethyl carbonate (DMC) in a volume ratio (at 25 °C) of 3:3:4, LiPF₆ was dissolved to a concentration of 1.2 mol/L, and a non-aqueous electrolyte was thereby prepared.

### [Production of Test Cell (Secondary Battery)]

An aluminum lead was attached to the exposed portion of the above positive electrode, and a nickel lead was attached to the exposed portion of the above negative electrode. The positive electrode and the negative electrode were wound in a spiral shape with an interposed separator made of polyolefin to thereby produce a spiral-type electrode assembly. Insulating plates were respectively placed above and below the electrode assembly, and the electrode assembly was housed in an outer can. The negative electrode lead was welded to the bottom of the outer can having the shape of a bottomed cylinder, and the positive electrode lead was welded to a sealing assembly. The electrolyte solution was injected in the outer can, and the opening of the outer can was sealed with the sealing assembly via a gasket, and a secondary battery serving as a test cell was thereby produced.

### [Evaluation of Initial Discharge Capacity and Charge-Discharge Cycle Characteristic (Capacity Retention Rate After Cycle Test)]

In a temperature environment of 25 °C, the above test cell was charged at a constant current of 1 C until the battery voltage reached 4.2 V, and then charged at a constant voltage of 4.2 V until the current value reached 0.02 C. After that, the test cell was discharged at a constant current of 1 C until the battery voltage reached 2.5 V, and the discharge capacity at that time was recorded as the initial discharge capacity. Using the above charging and discharging process as one cycle, 150 cycles were performed to determine the initial discharge capacity and the discharge capacity in the 150th cycle, and the capacity retention rate was calculated by the formula below. A higher capacity retention rate indicates that the charge-discharge cycle characteristic is better. Capacity retention rate (%) = Discharge capacity in the 150th cycle / Initial discharge capacity × 100

### <Example 2>

A test cell was produced and evaluated in the same manner as in Example 1 except that, in the preparation of the positive electrode active material, lithium ethanesulfonate was used instead of lithium methanesulfonate, and the amount of lithium ethanesulfonate added was 0.5 mass% based on the total mass of the lithium-containing composite oxide.

### <Example 3>

A test cell was produced and evaluated in the same manner as in Example 1 except that, in the preparation of the positive electrode active material, sodium methanesulfonate was used instead of lithium methanesulfonate, and the amount of sodium methanesulfonate added was 0.5 mass% based on the total mass of the lithium-containing composite oxide.

### <Comparative Example 1>

A test cell was produced and evaluated in the same manner as in Example 1 except that, in the preparation of the positive electrode active material, lithium methanesulfonate was not added.

### <Comparative Example 2>

A test cell was produced and evaluated in the same manner as in Example 1 except that, in the preparation of the positive electrode active material, lithium succinate was used instead of methanesulfonic acid, and the amount of lithium succinate added was 0.5 mass% based on the total mass of the lithium-containing composite oxide.

### <Comparative Example 3>

A test cell was produced and evaluated in the same manner as in Example 1 except that, in the preparation of the positive electrode active material, lithium oxalate was used instead of methanesulfonic acid, and the amount of lithium oxalate added was 0.5 mass% based on the total mass of the lithium-containing composite oxide.

The evaluation results of the test cells of Examples 1 to 3 and Comparative Examples 1 to 3 are shown in Table 1. In Table 1, the initial discharge capacity values of the test cells of Examples 1 to 3 and Comparative Examples 2 and 3 are values relative to the initial discharge capacity value of the test cell of Comparative Example 1, which is assumed to be 100.

**[Table 1]**

| | Positive electrode | | C1/C2 | T1/ (T1+T2) | Initial discharge capacity | Capacity retention rate [%] |
|---|---|---|---|---|---|---|
| | Added compound | Amount added [mass%] | | | | |
| Example 1 | Li methanesulfonate | 0.5 | 2 | 0.5 | 103 | 70 |
| Example 2 | Li ethanesulfonate | 0.5 | 2 | 0.5 | 101 | 70 |
| Example 3 | Na methanesulfonate | 0.5 | 2 | 0.5 | 101 | 70 |
| Comparative Example 1 | (n/a) | - | 2 | 0.5 | 100 | 70 |
| Comparative Example 2 | Li succinate | 0.5 | 2 | 0.5 | 100 | 55 |
| Comparative Example 3 | Li oxalate | 0.5 | 2 | 0.5 | 100 | 55 |

As shown in Table 1, all of the test cells of Examples 1 to 3 had improved initial discharge capacity values compared to the test cell of Comparative Example 1, and it can be seen that favorable battery capacity and charge-discharge characteristic can be simultaneously achieved by configuring the positive electrode to contain a methanesulfonic acid compound. In particular, the test cell of Example 1 containing lithium methanesulfonate in the positive electrode had a significantly improved initial discharge capacity. In contrast, the test cells of Comparative Examples 2 and 3 had initial discharge capacity values equivalent to that of the test cell of Comparative Example 1, and had lower capacity retention rates. From this, it can be seen that sulfonic acid compounds have notable advantageous effects compared to succinic acid compounds and oxalic acid compounds.

### <Comparative Example 4>

A test cell was produced and evaluated in the same manner as in Example 1 except that, in the production of the negative electrode, the amount of single-walled CNT added in preparing the first negative electrode mixture slurry was changed to 0.1 parts by mass.

### <Comparative Example 5>

A test cell was produced and evaluated in the same manner as in Comparative Example 4 except that, in the preparation of the positive electrode active material, lithium methanesulfonate was not added.

### <Example 4>

A test cell was produced and evaluated in the same manner as in Example 1 except that, in the production of the negative electrode, the amount of single-walled CNT added in preparing the first negative electrode mixture slurry was changed to 0.5 parts by mass.

### <Comparative Example 6>

A test cell was produced and evaluated in the same manner as in Example 4 except that, in the preparation of the positive electrode active material, lithium methanesulfonate was not added.

### <Example 5>

A test cell was produced and evaluated in the same manner as in Example 1 except that, in the production of the negative electrode, the amount of single-walled CNT added in preparing the first negative electrode mixture slurry was changed to 1.0 part by mass.

### <Comparative Example 7>

A test cell was produced and evaluated in the same manner as in Example 5 except that, in the preparation of the positive electrode active material, lithium methanesulfonate was not added.

The evaluation results of the test cells of Examples 1, 4, and 5 and Comparative Examples 1 and 4 to 7 are shown in Table 2. In Table 2, the initial discharge capacity values of the test cells of Examples 1, 4, and 5 and Comparative Examples 4 to 7 are values relative to the initial discharge capacity value of the test cell of Comparative Example 1, which is assumed to be 100.

**[Table 2]**

| | Positive electrode | | C1/C2 | T1/ (T1+T2) | Initial discharge capacity | Capacity retention rate [%] |
|---|---|---|---|---|---|---|
| | Added compound | Amount added [mass%] | | | | |
| Comparative Example 4 | Li methanesulfonate | 0.5 | 1 | 0.5 | 103 | 55 |
| Comparative Example 5 | (n/a) | - | 1 | 0.5 | 100 | 60 |
| Example 1 | Li methanesulfonate | 0.5 | 2 | 0.5 | 103 | 70 |
| Comparative Example 1 | (n/a) | - | 2 | 0.5 | 100 | 70 |
| Example 4 | Li methanesulfonate | 0.5 | 5 | 0.5 | 103 | 70 |
| Comparative Example 6 | (n/a) | - | 5 | 0.5 | 100 | 70 |
| Example 5 | Li methanesulfonate | 0.5 | 10 | 0.5 | 103 | 60 |
| Comparative Example 7 | (n/a) | - | 10 | 0.5 | 100 | 60 |

From the results in Table 2, it can be seen that the capacity retention rate is improved when C1/C2 > 1, and that C1/C2 ≤ 10 is preferable.

### <Example 6>

A test cell was produced and evaluated in the same manner as in Example 1 except that, in the production of the negative electrode, the coating mass ratio per unit area of the first negative electrode mixture slurry to that of the second negative electrode mixture slurry was 20:80. The value of T1/(T1+T2) was 0.2.

### <Comparative Example 8>

A test cell was produced and evaluated in the same manner as in Example 6 except that, in the preparation of the positive electrode active material, lithium methanesulfonate was not added.

The evaluation results of Examples 1 and 6 and Comparative Examples 1 and 8 are shown in Table 3. In Table 3, the initial discharge capacity values of the test cells of Examples 1 and 6 and Comparative Example 8 are values relative to the initial discharge capacity value of the test cell of Comparative Example 1, which is assumed to be 100.

**[Table 3]**

| | Positive electrode | | C1/C2 | T1/ (T1+T2) | Initial discharge capacity | Capacity retention rate [%] |
|---|---|---|---|---|---|---|
| | Added compound | Amount added [mass%] | | | | |
| Example 1 | Li methanesulfonate | 0.5 | 2 | 0.5 | 103 | 70 |
| Comparative Example 1 | (n/a) | - | 2 | 0.5 | 100 | 70 |
| Example 6 | Li methanesulfonate | 0.5 | 2 | 0.2 | 103 | 70 |
| Comparative Example 8 | (n/a) | - | 2 | 0.2 | 100 | 70 |

From the results in Table 3, it can be seen that also when T1/(T1+T2) = 0.2, capacity retention rates equivalent to those in the case where T1/(T1+T2) = 0.5 can be obtained.

The present disclosure is further illustrated by the following embodiments.

### Configuration 1:

A non-aqueous electrolyte secondary battery, comprising
a positive electrode, a negative electrode, and a non-aqueous electrolyte, wherein
the positive electrode contains a lithium-containing composite oxide and a sulfonic acid compound present at a surface of particles of the lithium-containing composite oxide,
the sulfonic acid compound is a compound represented by formula (I),
the negative electrode comprises a negative electrode core, a first negative electrode mixture layer provided at a surface of the negative electrode, and a second negative electrode mixture layer provided between the first negative electrode mixture layer and the negative electrode core,
the first negative electrode mixture layer and the second negative electrode mixture layer contain a negative electrode active material and a conductive agent, and
a content C1 of the conductive agent in the first negative electrode mixture layer and a content C2 of the conductive agent in the second negative electrode mixture layer satisfy C1 > C2. 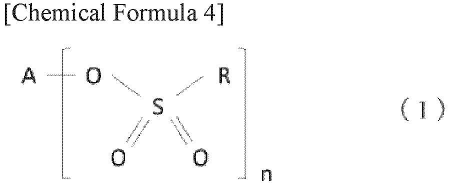 (where A is a Group 1 or Group 2 element, R is a hydrocarbon group, and n is 1 or 2.)

### Configuration 2:

The non-aqueous electrolyte secondary battery according to Configuration 1, wherein A is a Group 1 element.

### Configuration 3:

The non-aqueous electrolyte secondary battery according to Configuration 1, wherein A is Li.

### Configuration 4:

The non-aqueous electrolyte secondary battery according to any one of Configurations 1 to 3, wherein R is an alkyl group.

### Configuration 5:

The non-aqueous electrolyte secondary battery according to any one of Configurations 1 to 3, wherein R is a methyl group.

### Configuration 6:

The non-aqueous electrolyte secondary battery according to any one of Configurations 1 to 5, wherein an amount of the sulfonic acid compound present at the surface of the lithium-containing composite oxide is greater than or equal to 0.1 mass% and less than or equal to 1 mass% based on a mass of the lithium-containing composite oxide.

### Configuration 7:

The non-aqueous electrolyte secondary battery according to any one of Configurations 1 to 6, wherein the lithium-containing composite oxide has a layered rock salt structure.

### Configuration 8:

The non-aqueous electrolyte secondary battery according to any one of Configurations 1 to 7, wherein C1 and C2 satisfy 1 < C1/C2 ≤ 10.

### Configuration 9:

The non-aqueous electrolyte secondary battery according to any one of Configurations 1 to 8, wherein the conductive agent is fibrous carbon.

### Configuration 10:

The non-aqueous electrolyte secondary battery according to any one of Configurations 1 to 9, wherein a thickness T1 of the first negative electrode mixture layer and a thickness T2 of the second negative electrode mixture layer satisfy T1/(T1+T2) ≤ 0.5.

### Configuration 11:

The non-aqueous electrolyte secondary battery according to any one of Configurations 1 to 10, wherein the negative electrode active material contains a silicon-containing material.

### Configuration 12:

The non-aqueous electrolyte secondary battery according to Configuration 11, wherein the silicon-containing material contains SiOₓ (where 0.5 ≤ x ≤ 1.5).

### REFERENCE SIGNS LIST

10 non-aqueous electrolyte secondary battery; 11 positive electrode; 12 negative electrode; 13 separator; 14 electrode assembly; 16 outer can; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket; 30 negative electrode core; 31 first negative electrode mixture layer; 32 second negative electrode mixture layer.

## Claims

1. A non-aqueous electrolyte secondary battery, comprising
a positive electrode, a negative electrode, and a non-aqueous electrolyte, wherein
the positive electrode contains a lithium-containing composite oxide and a sulfonic acid compound present at a surface of particles of the lithium-containing composite oxide,
the sulfonic acid compound is a compound represented by formula (I),
the negative electrode comprises a negative electrode core, a first negative electrode mixture layer provided at a surface of the negative electrode, and a second negative electrode mixture layer provided between the first negative electrode mixture layer and the negative electrode core,
the first negative electrode mixture layer and the second negative electrode mixture layer contain a negative electrode active material and a conductive agent, and
a content C1 of the conductive agent in the first negative electrode mixture layer and a content C2 of the conductive agent in the second negative electrode mixture layer satisfy C1 > C2. 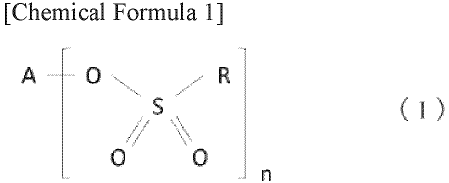 (where A is a Group 1 or Group 2 element, R is a hydrocarbon group, and n is 1 or 2.)

2. The non-aqueous electrolyte secondary battery according to claim 1, wherein A is a Group 1 element.

3. The non-aqueous electrolyte secondary battery according to claim 1, wherein A is Li.

4. The non-aqueous electrolyte secondary battery according to claim 1, wherein R is an alkyl group.

5. The non-aqueous electrolyte secondary battery according to claim 1, wherein R is a methyl group.

6. The non-aqueous electrolyte secondary battery according to claim 1, wherein an amount of the sulfonic acid compound present at the surface of the lithium-containing composite oxide is greater than or equal to 0.1 mass% and less than or equal to 1 mass% based on a mass of the lithium-containing composite oxide.

7. The non-aqueous electrolyte secondary battery according to claim 1, wherein the lithium-containing composite oxide has a layered rock salt structure.

8. The non-aqueous electrolyte secondary battery according to claim 1, wherein C1 and C2 satisfy 1 < C1/C2 ≤ 10.

9. The non-aqueous electrolyte secondary battery according to claim 1, wherein the conductive agent is fibrous carbon.

10. The non-aqueous electrolyte secondary battery according to claim 1, wherein a thickness T1 of the first negative electrode mixture layer and a thickness T2 of the second negative electrode mixture layer satisfy T1/(T1+T2) ≤ 0.5.

11. The non-aqueous electrolyte secondary battery according to claim 1, wherein the negative electrode active material contains a silicon-containing material.

12. The non-aqueous electrolyte secondary battery according to claim 11, wherein the silicon-containing material contains SiOₓ (where 0.5 ≤ x ≤ 1.5).
